# EUROPEAN PATENT APPLICATION

(11) **EP 1 830 564 A1**
(43) Date of publication of application: **05.09.2007**
(21) Application number: 05785926.6
(22) Date of filing: 20.09.2005
(51) Int. Cl.: H04N 5/225, G02B 7/28

(54) **FOCUSING AREA ADJUSTING CAMERA-CARRYING PORTABLE TERMINAL**

(30) Priority: 25.11.2004 JP 2004340939
(71) Applicant: Sharp Kabushiki Kaisha, Osaka-shi, Osaka 545-8522 (JP)
(72) Inventor: MASUBUCHI, Minako, Funabashi-shi, Chiba 273-0011 (JP)
(74) Representative: Müller, Frithjof E.
(86) International application number: PCT/JP2005/017314
(87) International publication number: WO 2006/057101

(57) **Abstract**

A so-called out-of-focus problem occurs when a subject is not positioned in the center of a lens in an ordinary auto-focus function. A focusing point adjusting device is proposed to solve such a problem which divides a photographing area captured by a camera into a plurality of areas, and selects an area to which a user want to focus to automatically focus to the selected area. However, with a single-hand-operated small terminal especially such as a camera-carrying cell phone, problems are likely to be posed such that a user's finger gets into a camera photographing area to cause shaking. A focusing area adjusting camera-carrying portable terminal which has functions of displaying a subject captured by the camera on a monitor screen, and selecting and determining a focusing area while the user watches the monitor screen. The user selects a focusing area and then determines it by depressing a button or the like, thereby enabling the user to ease a shaking problem or the like.

## Description

### BACKGROUND OF THE INVENTION

### Field of the Invention

The present invention relates to a portable terminal equipped with a camera, which can select and determine an area including an object to be focused from a plurality of objects, thereby performing automatic focusing on the determined area.

### Description of the Related Art

In recent years, more and more portable terminals equipped with a camera having a photographing function as typified by a mobile phone or a digital camera is equipped with an automatic focusing function. However, generally, an automatic focusing function focuses on an object captured in the center of a lens, so that if the object to be focused is captured in another portion of the lens, the object is out of focus. In order to solve the above deficiency, in the cited document (Jpn. Patent Publication No. 2768469), a focus adjusting apparatus, in which a photographed area captured by a camera includes a plurality of focusing areas, and selecting means for a camera user to select an area to be focused from a plurality of focusing areas is comprised, and a signal for automatic focusing on the selected area is generated, has been disclosed.

However, although the invention of Jpn. Patent Publication No. 2768469 is effective for a device mainly used for photographing, there are many multifunctional devices having functions other than a photographing function. Specifically, in the case of a portable electronic device such as a mobile phone, a user usually operates it with one hand. In this case, the focusing is automatically performed just by the user's selection of an area to be focused, thereby making it troublesome. For example, the user's finger becomes an obstacle in the photographing area, or camera shake occurs.

### SUMMARY OF THE INVENTION

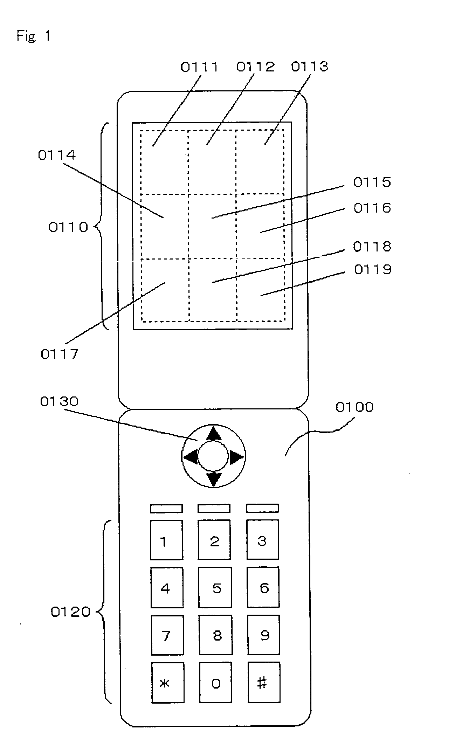

In order to solve the above deficiencies, the present invention provides a portable terminal provided with a camera having a focusing area adjusting function, which enables a user to select and determine an area including an object to be focused. Fig. 1 is an illustration of the portable terminal provided with a camera having a focusing area adjusting function of the present invention. Here, as an example, a portable terminal provided with a camera having a focusing area adjusting function (0100) is assumed to be a mobile phone etc. The portable terminal can perform photographing of an object by means of a camera (not indicated in drawings), and displays the object captured by the camera on a monitor screen (0110). The monitor screen (0110) is divided into a plurality of areas, and is for a user of the portable terminal to select and determine an area to be focused by watching the monitor screen. For example, in Fig. 1, the monitor screen (0110) is divided into 9 areas 0111 to 0119. The monitor screen may be divided into any number of areas, and shape and size of respective areas may be set to be different. Further, although the portable terminal (0100) is required to be equipped with a button for selecting and determining an area, if the portable terminal (0100) is a mobile phone as in the case of Fig. 1, it is originally equipped with a ten-key (0120) or a cross-shaped key (0130) etc., which can be used as the button for selecting and determining an area. This provides user-friendliness and benefit.

As described above, the portable terminal provided with a camera having a focusing area adjusting function (0100) of the present invention carries out a process of displaying an object captured by a camera on a monitor screen, and of selecting an area including the object to be focused for a plurality of objects, and further carries out a process of determining the selected area in said process as an area to be focused. This enables a user to select and determine the area to be focused by watching the monitor screen. Thus, the present invention has the determination process, so that an unnecessary shift to a mechanical-drive focusing process, which is carried out just by the selection of area, is solved. Specifically, in the case of a portable electronic device such as a mobile phone, a user usually operates it with one hand. In this case, the focusing is automatically performed just by the user's selection of an area to be focused, thereby causing making it troublesome. For example, the user's finger becomes an obstacle in the photographing area, or camera shake occurs. Therefore, if the mechanical-drive focusing process is carried out just by the selection process, the unnecessary focusing occurs. This deficiency can be solved by the configuration, in which the user finally determines the area by pressing a button after selecting the area.

### BRIEF DESCRIPTION OF THE DRAWINGS

Fig. 1 is an illustration of the present invention;
Fig. 2 is a functional block diagram of the portable terminal provided with a camera having a focusing area adjusting function of a first embodiment;
Fig. 3 is an illustration of the monitor screen;
Fig. 4 is a flow chart explaining the processing flow of the portable terminal of the first embodiment;
Fig. 5 is a functional block diagram of the portable terminal provided with a camera having a focusing area adjusting function of a second embodiment;
Fig. 6 is a diagram exemplifying the displaying means for ten-key symbol;
Fig. 7 is a flow chart explaining the processing flow of the portable terminal of the second embodiment;
Fig. 8 is a functional block diagram of the portable terminal provided with a camera having a focusing area adjusting function of a third embodiment;
Fig. 9 is a diagram exemplifying the displaying means for cross-shaped key symbol;
Fig. 10 is a flow chart explaining the processing flow of the portable terminal of the third embodiment;
Fig. 11 is a functional block diagram of the portable terminal provided with a camera having a focusing area adjusting function of a fourth embodiment;
Fig. 12 is a flow chart explaining processing flow of the portable terminal of the fourth embodiment;
Fig. 13 is a functional block diagram of the portable terminal provided with a camera having a focusing area adjusting function of a fifth embodiment;
Fig. 14 is a diagram exemplifying the setting means for size of focusing area; and
Fig. 15 is a flow chart explaining the processing flow of the portable terminal of the fifth embodiment.

### DETAILED DESCRIPTION OF THE INVENTION

Embodiments of the present invention will be described hereinbelow with reference to the drawings. The present invention is not to be limited to the above embodiments and can be embodied in various forms without departing from the scope thereof.

### (First embodiment)

The first embodiment is a portable terminal provided with a camera, which can select and determine an area including an object to be focused from a plurality of objects, thereby performing adjustment of focusing on the determined area. The portable terminal of the first embodiment displays an object captured by a camera mounted on a body on a monitor screen, and enables a user to select and determine an area including the object to be focused.

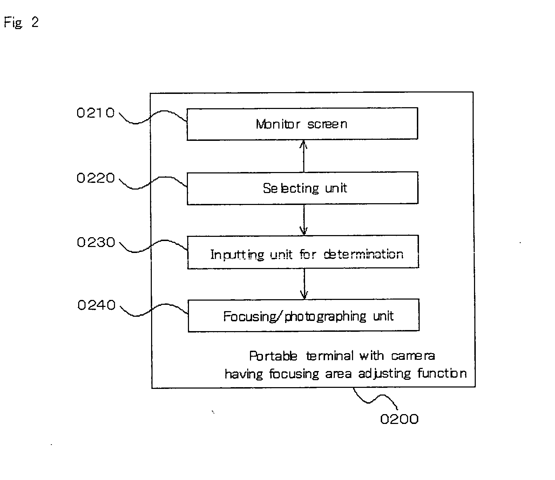

Fig. 2 is a functional block diagram of a portable terminal provided with a camera having a focusing area adjusting function (0200) of the first embodiment. The portable terminal (0200) comprises a 'monitor screen' (0210), a 'selecting unit' (0220), an 'inputting unit for determination' (0230), and a 'focusing/photographing unit' (0240). The portable terminal (0200) may be any type of portable terminal, which is carriable. Specifically, the portable terminal is assumed as a portable terminal such as a mobile phone, which is compact and operable by one hand.

The 'monitor screen' (0210) is for monitoring an object. The term 'object' means an object to be photographed in cases where the user of the portable terminal takes a photograph by means of a camera mounted on its body. The term 'monitoring' means displaying the object, so that the user can monitor the object captured by the camera. Actually, the entire photographing area including the object captured by the camera is displayed. Further, all areas of the monitor screen is divided into a plurality of focusing areas. The term 'focusing area' means an area, into which the area including the object displayed on the monitor screen is divided. The area may be divided into any number of focusing areas. Moreover, the shape and size of respective focusing areas may be set to be different. Further, the boundary of the focusing area may be indicated or not indicated by a boundary line. An example of the monitor screen includes a display of a mobile phone.

The 'selecting unit' (0220) is for selecting a focusing area in said monitor screen (0210). The user of the portable terminal selects the area including the object to be focused, so that it becomes possible to carry out focusing on the target object. For example, it is useful that the selecting unit includes the cross-shaped key (key 0130 in Fig. 1, the key for moving the cursor indicated on the screen from right to left or up and down), or the ten-key (key 0120 in Fig. 1, the button on which a number, hiragana, or alphabet etc. is indicated) has the function as the selecting unit. Further, buttons for selection may be used. Moreover, the focusing area may be selected by touching said monitor screen (0210) through a touch panel etc.

The 'inputting unit for determination' (0230) is for determination of the focusing area selected by said selecting unit (0220) as a focusing area for photographing, which is a focusing area used for photographing. The term 'used for photographing' means, for example, focusing etc. on the object included in the focusing area for photographing. For example, the ten-key etc. of a mobile phone may have the function of the inputting unit, or the button for determining may be used. Moreover, a configuration, in which the focusing area is selected by the initial pressing of the ten-key etc., and is determined by pressing it a second time, may be used. This makes it possible to select and determine without moving the user's finger, thereby enabling easy operation and preventing a mistake etc. Further, it is more useful that a click of a shutter is carried out by the third pressing of the button. Further, the click of the shutter may be carried out by the user's determination of the focusing area.

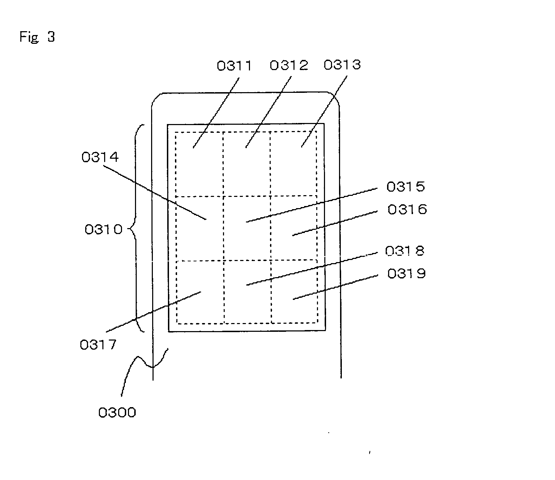

Fig. 3 is an illustration of the monitor screen. Fig. 3 shows an enlarged view of a monitor screen (0210) of the portable terminal (0200), and the monitor screen (0210) is divided into 9 focusing areas, 0311 to 0319. The focusing areas may or may not be indicated by rectangles surrounded by perforated lines on the monitor screen as shown in Fig. 3. For example, if said selecting unit is a touch panel, a configuration, in which the user directly touches the position of the object to be focused, so that the selection of the focusing area is indirectly carried out, is enough. In this case, the focusing area need not be indicated. In addition, a configuration, in which number corresponding to ten-key is indicated on the respective focusing areas, and the user selects the target focusing area by pressing the ten-key, may be used. In addition, although the monitor screen is divided into 9 focusing areas in this example, it may also be divided into smaller areas or larger areas.

The 'focusing/photographing unit' (0240) performs focusing on the object, which is monitored within the focusing area for photographing determined through said inputting unit for determination, and performs photographing of the object. The term 'focusing' is an operation for focusing an object. For example, in the contrast detection method generally used for an automatic focusing function of a digital camera (a method, in which a lens is moved inside of a camera, and a position indicating high contrast is determined as an in-focus position), the position indicating high contrast is detected by moving a lens, and the lens is adjusted on the position, thereby focusing. The term 'photographing' means capturing the light incoming through the lens of the camera as image data. Therefore, the focusing/photographing unit includes mechanisms such as a mechanism for automatic focusing and a mechanism for photographing.

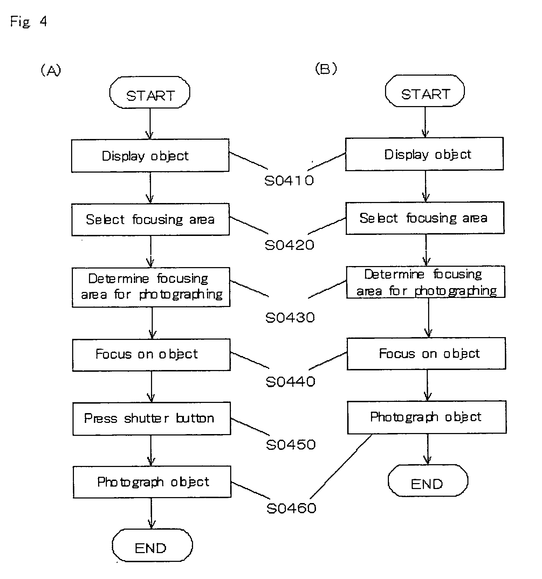

Fig. 4 is a flow chart explaining the processing flow of the portable terminal of the first embodiment. Fig. 4 (A) is a flow chart illustrating cases where the user presses the shutter button, and Fig. 4 (B) is a flow chart illustrating cases where the click of the shutter is automatically performed. The difference between (A) and (B) is whether or not a pressing step for shutter button (S0450) is carried out. At the outset, the object captured by the camera of the portable terminal is displayed on the monitor screen. This processing is performed by the monitor screen (a displaying step for object S0410). Subsequently, the focusing area is selected according to the object displayed in said displaying step for object (S0410). This processing is carried out by the selecting unit (a selecting step for focusing area S0420). Subsequently, the focusing area selected in said selecting step for focusing area (S0420) is determined as the focusing area for photographing. This processing is carried out by the inputting unit for determination (an inputting step for determination S0430). Subsequently, the object monitored within the focusing area for photographing determined in said inputting step for determination (S0430) is focused. This processing is carried out by the focusing/photographing unit (a focusing step for object S0440). Subsequently, the shutter button is pressed (only in case (A)). This processing is carried out by the focusing/photographing unit (a pressing step for shutter button S0450). Finally, the object focused in said focusing step for object (S0440) is photographed. This processing is carried out by the focusing/photographing unit (a photographing step for object S0460).

Note that the above processing can be executed by a program for operating a computer, and this program can be stored in the readable storage medium by the computer (the same is applied through the entire specification).

The portable terminal provided with a camera having a focusing area adjusting function of the first embodiment has a function of displaying the object captured by the camera, a function of making/allowing the user to select and determine the focusing area, and a function of focusing on the determined focusing area for photographing and of photographing. Since the user can determine the focusing area for photographing by once more pressing the determination button etc. after selecting the focusing area, the user can determine the focusing area for photographing checking problems such as a when the user's finger becomes an obstacle in the photographing area, or trouble occurring from camera shake. In addition, the user can photograph without pressing the shutter button after determining the focusing area.

### (Second embodiment)

The second embodiment is a portable terminal provided with a camera having a focusing area adjusting function, which further has a function of selecting the focusing area by operating ten-key in addition to the functions of the portable terminal of the first embodiment.

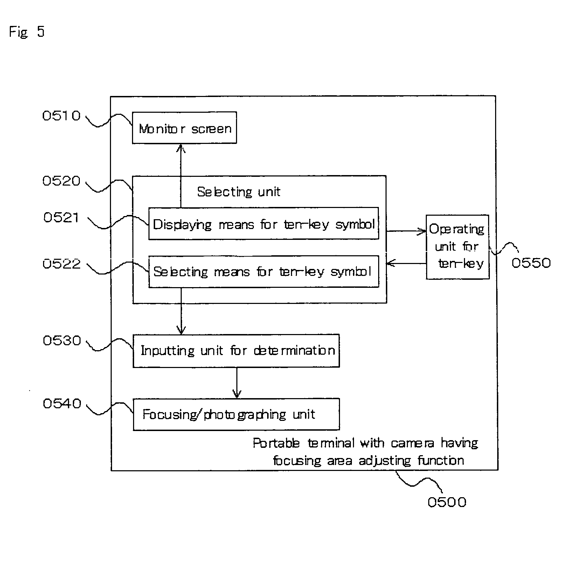

Fig. 5 is a functional block diagram of the portable terminal (0500) of the second embodiment. The portable terminal (0500) comprises a 'monitor screen' (0510), a 'selecting unit' (0520), an 'inputting unit for determination' (0530), a 'focusing/photographing unit' (0540), and an 'operating unit for ten-key' (0550). In addition, said selecting unit (0520) comprises 'displaying means for ten-key symbol' (0521), and 'selecting means for ten-key symbol' (0522). The configuration excluding the operating unit for ten-key (0550), the displaying means for ten-key symbol (0521), and the selecting means for ten-key symbol (0522) is the same as that of portable terminal with camera having a focusing area adjusting function of the first embodiment, so that the description will be omitted.

The 'operating unit for ten-key' (0550) operates ten-key etc. Not only ten-key but also an e-mail button (a button for activating e-mail function), or a memo button (a button for activating memo function) may be operated. Examples of the operation unit for ten-key include ten-key of a mobile phone, e-mail button, or a memo button. Further, in cases where the operating unit for ten-key is arranged in a position in which the operating unit for ten-key is operable by a thumb of one hand supporting a body of the portable terminal, operability of the operating unit for ten-key is high, thereby reducing problems such as when the user's finger becomes an obstacle in the photographing area, or trouble occurring from camera shake

The 'displaying means for ten-key symbol' (0521) divides said monitor screen (0510) into a plurality of areas, assigns a ten-key symbol to the respective areas, and displays the assigned ten-key symbol. The term 'divides monitor screen into a plurality of areas' means that the entire area of the monitor screen is divided into a plurality of areas as the focusing area. The monitor screen (0510) may be divided into any number of focusing areas. Moreover, the shape and size of respective focusing areas may be set to be different. The term 'ten-key symbol' is a symbol, which indicates correspondence between the respective focusing areas and the ten-key etc. of the portable terminal. The ten-key symbol may be variously arranged. For example, in cases where the portable terminal is a mobile phone, if the arrangement of the ten-key etc. of the mobile phone and the arrangement of the ten-key symbols assigned to the focusing areas are the same, the user can sensuously select the focusing area, thereby providing user-friendliness. In addition, the focusing area may be changed according to the object captured by the camera. In addition, the ten-key symbol may be indicated on said monitor screen (0510) at the point of activating photographing function of the portable terminal, or the user can switch display or non-display of the symbol by pressing a button for displaying symbol.

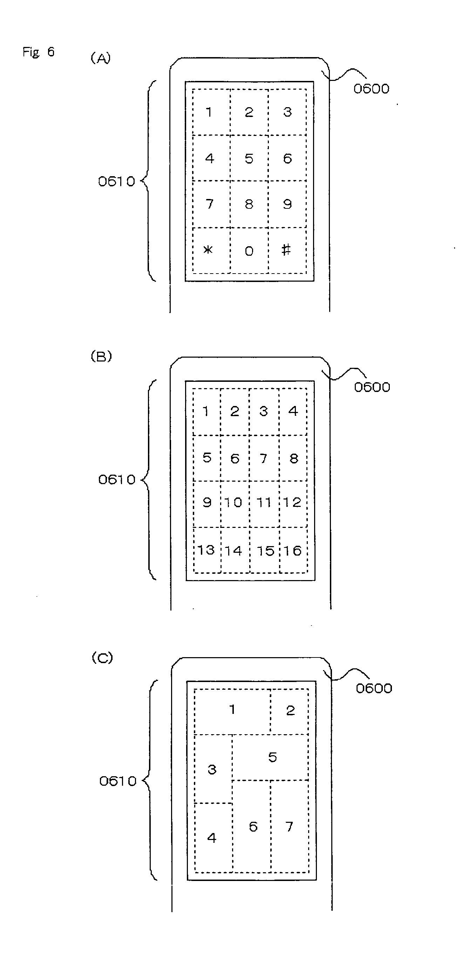

Fig. 6 is a diagram exemplifying the displaying means for ten-key symbol. Reference numeral (0500) indicates the portable terminal, and Reference numeral (0510) indicates the monitor screen. In Fig. 6 (A), the monitor screen (0510) is equally divided into 12 focusing areas. The boundary of the respective focusing areas is indicated by perforated lines, and a number or symbol is indicated at the same time. The number or symbol corresponds to the ten-key of the portable terminal (0500). For example, the focusing area 6 is selected by pressing the key '6'. Further, the focusing area # is selected by pressing the key '#'. In Fig. 6 (B), the monitor screen (0510) is equally divided into 16 focusing areas. Similar to (A), the boundary of the respective focusing areas is indicated by perforated lines. By pressing each digit of the number indicated on the respective focusing areas, the respective focusing areas are selected. For example, by pressing the key '1' and '4' in this order, the focusing area '14' is selected. In Fig. 6 (C), the monitor screen (0510) is equally divided into 7 focusing areas, and the size and shape of the respective areas are different. Note that the above cases of Fig. 6 (A) to (C) are examples, and other indication methods may be used.

The 'selecting means for ten-key symbol' (0522) selects the area in said monitor screen (0510), to which the ten-key symbol has been assigned, as the focusing area for photographing by means of operating said operating unit for ten-key (0550).

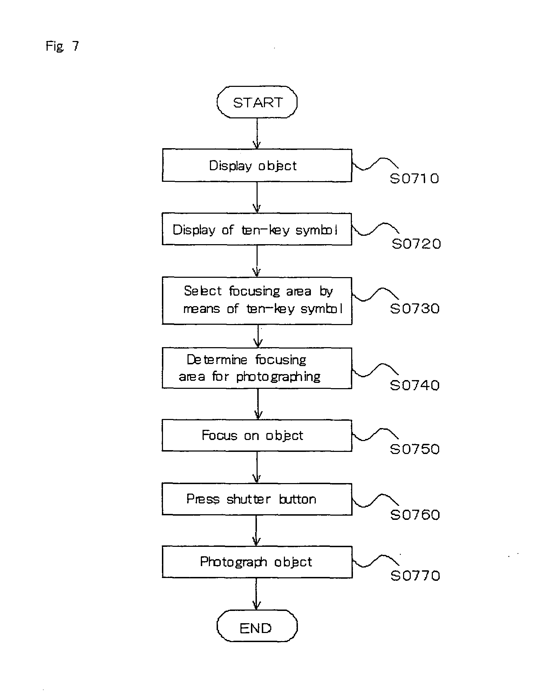

Fig. 7 is a flow chart explaining processing flow of the portable terminal of the second embodiment. Steps S0710 and S0740 to S0770 are the same as the steps S0410 and S0430 to S0460 in the flow chart of Fig. 4 (A) of the first embodiment, so that the description thereof will be omitted. Further, step S0760 may not be necessary. At the outset, the object captured by the camera of the portable terminal provided with a camera having a focusing area adjusting function is displayed on the monitor screen (a displaying step for object S0710). Subsequently, the ten-key symbol is displayed on the monitor screen, on which the object is displayed by said displaying step for object (S0710). This processing is carried out by the displaying means for ten-key symbol (a displaying step for ten-key symbol S0720). Subsequently, the focusing area, to which the ten-key symbol displayed in said displaying step for ten-key symbol (S0720) has been assigned, is selected. This processing is carried out by the selecting means for ten-key symbol (a selecting step for focusing area corresponding to ten-key symbol S0730). Subsequently, the focusing area selected in said selecting step for ten-key symbol (S0730) is determined as the focusing area for photographing (an inputting step for determination S0740). Subsequently, the object monitored within the focusing area for photographing determined in said inputting step for determination (S0740) is focused (a focusing step for object S0750). Subsequently, the shutter button is pressed (a pressing step for shutter button S0760). Finally, the object focused in said focusing step for object (S0750) is photographed (a photographing step for object S0770).

The portable terminal provided with a camera having a focusing area adjusting function of the second embodiment further has the function of displaying the ten-key symbol on the focusing area on the monitor screen, and the function of selecting the focusing area by operating the ten-key etc. in addition to the functions of the first embodiment. Therefore, the ten-key etc., which is usually used upon using a mobile phone, has the function of selecting the focusing area, so that the high operability is provided and it becomes possible to reduce problems such as a when the user's finger becomes an obstacle in the photographing area, or trouble occurring from camera shake. Further, in cases where the portable terminal is a compact portable terminal such as a mobile phone, the ten-key etc. is usually arranged in a position in which it is operable by a thumb of one hand supporting a body of the portable terminal, thereby providing higher operability.

### (Third embodiment)

The third embodiment is a portable terminal provided with a camera having a focusing area adjusting function, which further has a function of selecting the focusing area by operating cross-shaped key in addition to the functions of the portable terminal provided of the first embodiment.

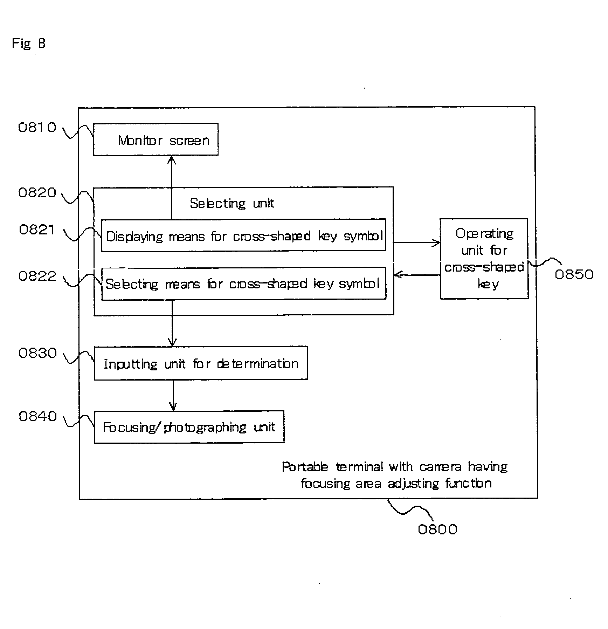

Fig. 8 is a functional block diagram of the portable terminal provided with a camera having a focusing area adjusting function (0800) of the third embodiment. The portable terminal (0800) comprises a 'monitor screen' (0810), a 'selecting unit' (0820), an 'inputting unit for determination' (0830), a 'focusing/photographing unit' (0840), and an 'operating unit for cross-shaped key' (0850). In addition, said selecting unit (0820) comprises a 'displaying means for cross-shaped key symbol' (0821), and the 'selecting means for cross-shaped key symbol' (0822). The configuration excluding the operating unit for cross-shaped key (0850), the displaying means for cross-shaped key symbol (0821), and the selecting means for cross-shaped key symbol (0822) is the same as that of portable terminal of the first embodiment, so that the description will be omitted.

The 'operating unit for cross-shaped key' (0850) is for operating a cross-shaped key. The term 'cross-shaped key' corresponds to a key such as the key 0130 in Fig. 1, the key for moving the cursor indicated on the screen from right to left or up and down. Although the key can be pressed mainly in four directions, right, left, up and down, it may be pressed in directions. An example of the operating unit for cross-shaped key includes a ten-key of a mobile phone. Further, in cases where the operating unit for ten-key is arranged in a position in which the operating unit for ten-key is operable by a thumb of one hand supporting a body of the portable terminal, operability of the operating unit for ten-key is high, thereby reducing problems such as a when the user's finger becomes an obstacle in the photographing area, or trouble occurring from camera shake.

The 'displaying means for cross-shaped key symbol' (0821) displays a cross-shaped key symbol, which is operable by said cross-shaped key, on said monitor screen (0810). The 'cross-shaped key' is a symbol for indicating the focusing area currently selected. The focusing area may be changed according to an object captured by a camera. In such case, shape and position of the cross-shaped key symbol change according to the change of the focusing area. In addition, the move of the cross-shaped key is performed not only by moving the cross-shaped key symbol to adjacent focusing areas when the user presses cross-shaped key, but also by sliding the focusing area, thereby sliding the cross-shaped key symbol. In addition, various indication methods for the cross-shaped key symbol may be used. For example, the focusing area may be indicated by perforated lines surrounding the focusing area, or by a small X mark in the center of the focusing area. In addition, the cross-shaped key symbol may be indicated on said monitor screen (0810) along with an object at the point of activating the photographing function of the portable terminal, and the user can switch display or non-display of the symbol by pressing a button for displaying symbol.

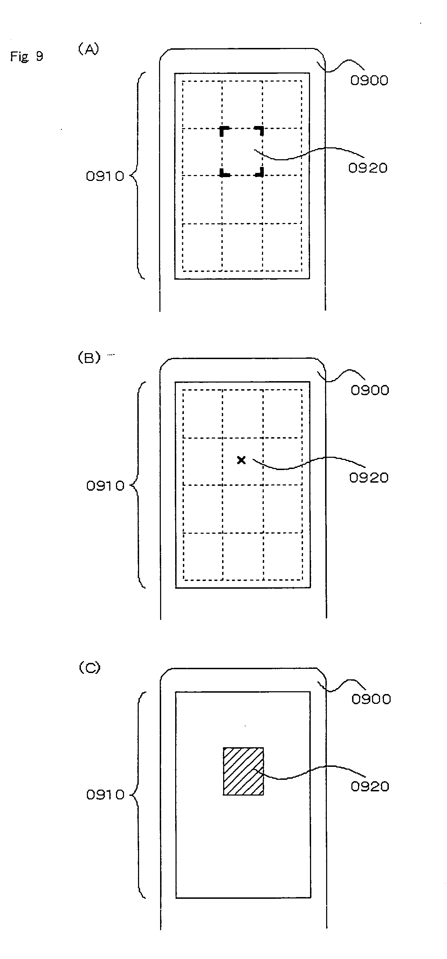

Fig. 9 is a diagram exemplifying the displaying means for cross-shaped key symbol. Reference numeral (0800) indicates the portable terminal, and Reference numeral (0810) indicates a monitor screen. In Fig. 9 (A), the monitor screen is equally divided into 12 focusing areas. The boundary of the respective focusing areas is indicated by perforated lines, and the cross-shaped key symbol is indicated by highlighting four corners of the focusing area (0920) with the heavy line. In addition, the boundary of the focusing area may not be indicated. In Fig. 9 (B), the monitor screen (0810) is equally divided into 12 focusing areas. The boundary of the respective focusing areas is indicated by perforated lines, and the cross-shaped key symbol is indicated by a small X mark (0920) in the center of the focusing area. In cases where the cross-shaped key symbol indicates only the center of the focusing area, and the boundary of the focusing area is not indicated, the user cannot know the size of the focusing area. Therefore, it is better for the user that the boundary of the focusing area is indicated by perforated lines etc. In Fig. 9 (C), the boundary of the focusing area is not indicated, and only the cross-shaped key is indicated by a shaded square (0920). Note that the above cases of Figs. (A) to (C) are examples, and other indication methods may be used.

The 'selecting means for cross-shaped key symbol' (0822) selects a predetermined area, which includes the cross-shaped key, as the focusing area for photographing by means of operating said operating unit for cross-shaped key (0850) to move the cross-shaped key symbol displayed by said displaying means for cross-shaped key symbol (0821) within said monitor screen (0810). The terms 'a predetermined area, which includes the cross-shaped key' corresponds, for example, to an area (0920) including the cross-shaped key symbol indicated by a small X mark in Fig. 9 (B).

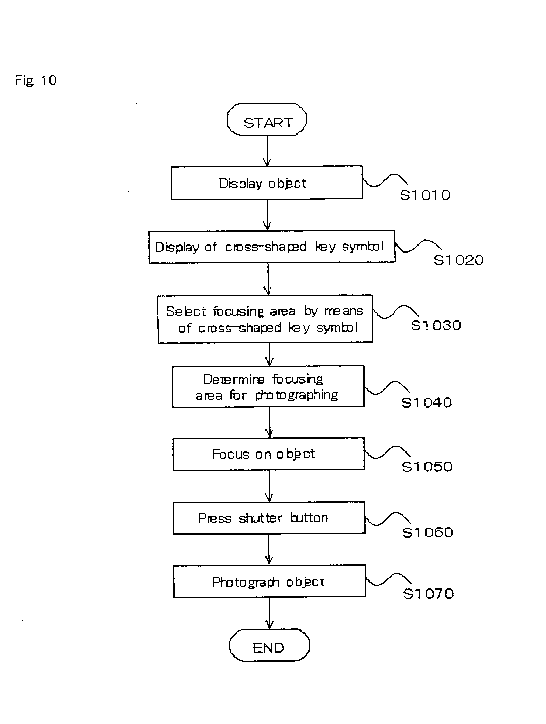

Fig. 10 is a flow chart explaining the processing flow of the portable terminal of the third embodiment. Steps S1010 and S1040 to S1070 are the same as steps S0410 and S0430 to S0460, respectively, in the flow chart of Fig. 4 (A) of the first embodiment, so that the description thereof will be omitted. Further, step S1060 may not be necessary. At the outset, the object captured by the camera of the portable terminal is displayed on the monitor screen (a displaying step for object S1010). Subsequently, the cross-shaped key symbol is displayed on the monitor screen, on which the object is displayed by said displaying step for object (S1010). This processing is carried out by the displaying means for cross-shaped key symbol (a displaying step for cross-shaped key symbol S1020). Subsequently, the focusing area including the cross-shaped key displayed in said displaying step for cross-shaped key symbol (S1020) is selected. This processing is carried out by the selecting means for cross-shaped key symbol (a selecting step for focusing area including cross-shaped key symbol S1030). Subsequently, the focusing area selected in said selecting step for focusing area including cross-shaped key symbol (S1030) is determined as the focusing area for photographing (an inputting step for determination S1040). Subsequently, the object monitored within the focusing area for photographing determined in said inputting step for determination (S1040) is focused (a focusing step for object S1050). Subsequently, the shutter button is pressed (a pressing step for shutter button S1060). Finally, the object focused in said focusing step for object (S1050) is photographed (a photographing step for object S1070).

The portable terminal provided with a camera having a focusing area adjusting function of the third embodiment further has the function of displaying the cross-shaped key symbol on the focusing area on the monitor screen, and the function of selecting the focusing area by operating the cross-shaped key etc. in addition to the functions of the first embodiment. Therefore, the cross-shaped key etc., which is usually used upon using a mobile phone, has the function of selecting the focusing area, so that the high operability is provided and it becomes possible to reduce problems such as when the user's finger becomes an obstacle in the photographing area, or trouble occurring from camera shake. Further, in cases where the portable terminal is a compact portable terminal such as a mobile phone, the cross-shaped key etc. is usually arranged in a position in which it is operable by a thumb of one hand supporting a body of the portable terminal, thereby providing higher operability.

### (Fourth embodiment)

The fourth embodiment is a portable terminal provided with a camera having a focusing area adjusting function, which further has a function of selecting the focusing area by operating touch panel in addition to the functions of the portable terminal of the first to third embodiments.

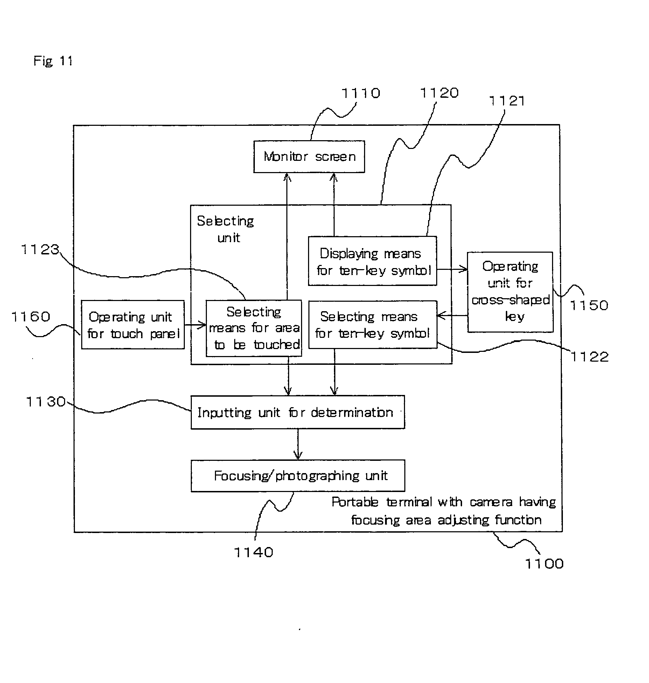

Fig. 11 is a functional block diagram of the portable terminal provided with a camera having a focusing area adjusting function (1100) of the fourth embodiment. The portable terminal (1100) comprises a 'monitor screen' (1110), a 'selecting unit' (1120), an 'inputting unit for determination' (1130), a 'focusing/photographing unit' (1140), an 'operating unit for ten-key' (1150), and an operating unit for touch panel (1160). In addition, said selecting unit (1120) comprises a 'displaying means for ten-key symbol' (1121), a 'selecting means for ten-key symbol' (1122), and a 'selecting means for area to be touched' (1123). The configuration excluding said operating unit for touch panel (1160), and said selecting means for area to be touched (1123) is the same as that of the portable terminal of the second embodiment, so that the description will be omitted. Further, in another configuration, said operating unit for ten-key (1150), said displaying means for ten-key symbol (1121), and said selecting means for ten-key symbol (1122) may be the operating unit for cross-shaped key, the displaying means for cross-shaped key symbol, and said selecting means for cross-shaped key symbol, respectively. Therefore, a configuration, in which the portable terminal of the third embodiment further comprises said operating unit for touch panel (1160) and said selecting means for area to be touched (1123), may be used. In addition, in another configuration, said operating unit for ten-key (1150), said displaying means for ten-key symbol (1121), and said selecting means for ten-key symbol (1122) may not be comprised. Therefore, a configuration, in which the portable terminal of the first embodiment further comprises said operating unit for touch panel (1160) and said selecting means for area to be touched (1123), may be used.

The 'operating unit for touch panel' (1160) is for operating a touch panel. Representative examples of touch panel, which is for sensing contact with a panel, include an optical touch panel, an ultrasonic touch panel, a capacitance touch panel, or a resistive touch panel, and any type of touch panel may be used. Further, in cases where the operating unit for touch panel is arranged in a position in which the operating unit for touch panel is operable by a thumb of one hand supporting a body of the portable terminal, operability of the operating unit for touch panel is high, thereby reducing problems such as when the user's finger becomes an obstacle in the photographing area, or trouble occurring from camera shake.

The 'selecting means for area to be touched' (1123) selects a predetermined area, which includes an area in the monitor screen touched through said operating unit for touch panel (1160), as the focusing area for photographing. The term 'a predetermined area, which includes an area in the monitor screen touched through said operating unit for touch panel' means a focusing area including an area of a monitor screen indirectly touched by the user of the portable terminal provided with a camera having a focusing area adjusting function through a touch panel. Further, the focusing area may or may not be indicated on said monitor screen (1110) by perforated line etc. In cases where the focusing area is not indicated, for example, the user of the portable terminal provided with a camera having a focusing area adjusting function specifies an object to be focused by touching a touch panel, so that the focusing area including the area touched by the user may be automatically selected. In addition, the focusing area may be changed according to the object captured by a camera, or may be changed, so that the position on the touch panel touched by the user is the center.

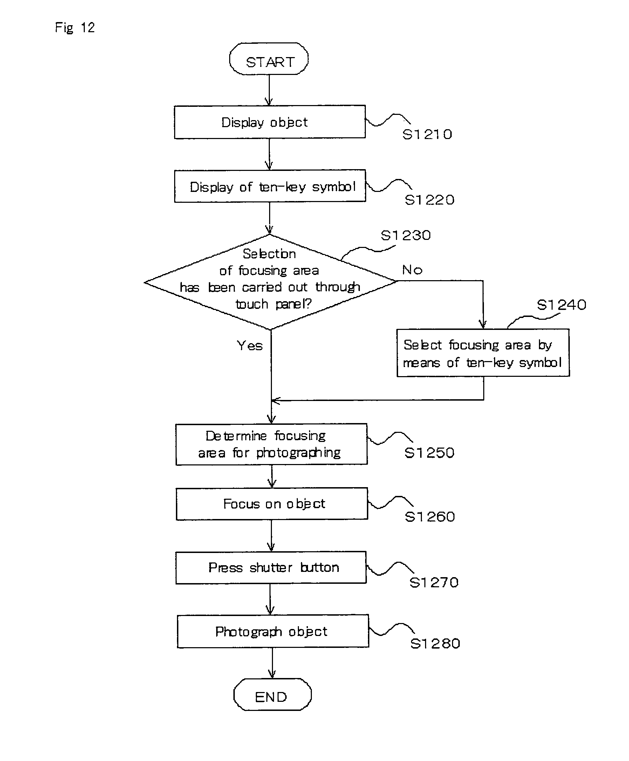

Fig. 12 is a flow chart explaining the processing flow of the portable terminal of the fourth embodiment. Steps S1210, S1220 and S1240 to S1280 are the same as steps S0710, S0720 and S0730 to S0770, respectively, in the flow chart of Fig. 7 of the second embodiment, so that the description thereof will be omitted. Further, step S1270 may not be necessary. At the outset, the object captured by the camera of the portable terminal is displayed on the monitor screen (a displaying step for object S1210). Subsequently, the ten-key symbol is displayed on the monitor screen, on which the object is displayed by said displaying step for object (S1210) (a displaying step for ten-key symbol S1220). Subsequently, it is determined whether the focusing area has been selected through the touch panel (a selecting step for focusing area through touch panel S1230). If it is determined that the focusing area has been selected through the touch panel, an inputting step for determination (S1250), which will be described below, is carried out. If it is determined that the focusing area has not been selected through the touch panel, a selecting step for focusing area corresponding to ten-key symbol (S1240), which will be described below, is carried out. Therefore, if it is determined by said selecting step for focusing area through touch panel (S1230) that the focusing area has not been selected through the touch panel, the focusing area, to which the ten-key symbol displayed in said displaying step for ten-key symbol (S1220) has been assigned, is selected (the selecting step for focusing area corresponding to ten-key symbol S1240). Subsequently, the focusing area selected by said selecting step for focusing area through touch panel (S1230) or by said selecting step for focusing area corresponding to ten-key symbol (S1240) is determined as a focusing area for photographing (an inputting step for determination S1250). Subsequently, the object monitored within the focusing area for photographing determined in said inputting step for determination (S1250) is focused (a focusing step for object S1260). Subsequently, the shutter button is pressed (a pressing step for shutter button S1270). Finally, the object focused in said focusing step for object (S1260) is photographed (a photographing step for object S1280).

Further, in cases where said operating unit for ten-key (1150), said displaying means for ten-key symbol (1121), and said selecting means for ten-key symbol (1122) are the operating unit for cross-shaped key, the displaying means for cross-shaped key symbol, and said selecting means for cross-shaped key symbol, respectively, the cross-shaped key symbol is displayed on the monitor screen in said displaying step for ten-key symbol (S1220), and the focusing area, to which the cross-shaped key symbol has been assigned, is selected in said selecting step for focusing area corresponding to ten-key symbol (S1240). Further, in cases where said operating unit for ten-key (1150), said displaying means for ten-key symbol (1121), and said selecting means for ten-key symbol (1122) are not be comprised, said displaying step for ten-key symbol (S 1220), and said selecting step for focusing area corresponding to ten-key symbol (S1240) are not carried out, and the focusing area is selected though the touch panel in said selecting step for focusing area through touch panel (S1230).

The fourth embodiment is a portable terminal provided with a camera having a focusing area adjusting function, which further has the function of selecting the focusing area through a touch panel in addition to the functions of the portable terminal provided with a camera having a focusing area adjusting function of the first to third embodiments. Therefore, the user of the portable terminal can select the focusing area by touching the monitor screen through the touch panel, thereby directly specifying the object to be focused. Further, in cases where the portable terminal is a compact portable terminal such as a mobile phone, the monitor screen, with which the touch panel is equipped, is usually arranged in a position in which it is operable by a thumb of one hand supporting a body of the portable terminal, thereby providing higher operability.

### (Fifth embodiment)

The fifth embodiment is a portable terminal provided with a camera having a focusing area adjusting function, which further has a function of setting the size of a focusing area in a monitor screen in addition to the functions of the portable terminal of the first to fourth embodiments.

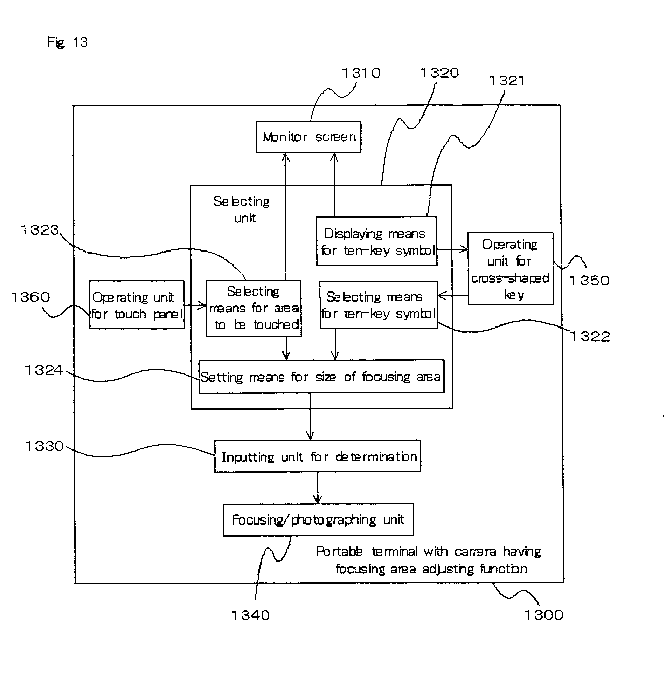

Fig. 13 is a functional block diagram of the portable terminal provided with a camera having a focusing area adjusting function (1300) of the fifth embodiment. The portable terminal with (1300) comprises a 'monitor screen' (1310), a 'selecting unit' (1320), an 'inputting unit for determination' (1330), a 'focusing/photographing unit' (1340), an 'operating unit for ten-key' (1350), and an operating unit for touch panel (1360). In addition, said selecting unit (1320) comprises a 'displaying means for ten-key symbol' (1321), a 'selecting means for ten-key symbol' (1322), a 'selecting means for area to be touched' (1323), and a setting means for size of focusing area (1324). The configuration excluding said setting means for size of focusing area (1324) is the same as that of portable terminal of the fourth embodiment, so that the description will be omitted. Further, in another configuration, said operating unit for ten-key (1350), said displaying means for ten-key symbol (1321), and said selecting means for ten-key symbol (1322) may be the operating unit for cross-shaped key, the displaying means for cross-shaped key symbol, and said selecting means for cross-shaped key symbol, respectively. In addition, in another configuration, said operating unit for touch panel (1360) and said selecting means for area to be touched (1323) may not be comprised. In addition, in other configuration, said operating unit for touch panel (1360), said selecting means for area to be touched (1323), said operating unit for ten-key (1350), said displaying means for ten-key symbol (1321), and said selecting means for ten-key symbol (1322) may not be comprised.

The 'setting means for size of focusing area' (1324) is for setting size of the focusing area in the monitor screen. Therefore, it is possible to change the size of the focusing area. In the case of changing the size of focusing area, any position may be set as a center position. For example, the center of the original focusing area may be set as the center position, or if the focusing area is square, its bottom line is fixed, and upper, right, and left lines are moved, thereby changing the focusing area. In addition, various magnifications in the case of changing size of the focusing area may be used. For example, the focusing area may be changeable to a size in which said monitor screen (1310) can be equally divided, or to any size. In addition, in cases where the size of the focusing area is changed, the size and layout of other focusing areas may be changed according to the size of the changed focusing area. In addition, it is useful that while the user keeps touching on the touch panel, the focusing area touched by the user becomes larger or smaller. In addition, the focusing area may be determined after determining the size of the focusing area, or the size of the focusing area may be changed after determining the focusing area.

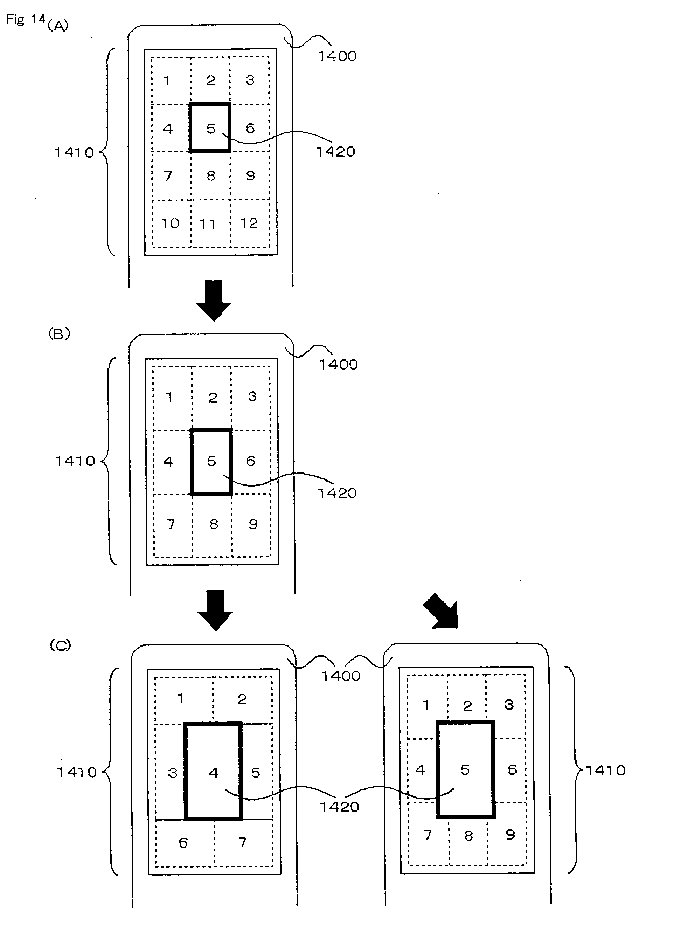

Fig. 14 is a diagram exemplifying the setting means for size of focusing area. Reference numeral 1300 indicates the portable terminal, reference numeral 1310 indicates the monitor screen, and reference numeral 1420 indicates a focusing screen, which has been selected. In Fig. 14 (A), the monitor screen is equally divided into 12 focusing areas, and focusing areas 14 and 20 are selected by a ten-key '5'. Fig. 14 (B) exemplifies the case where the focusing area is enlarged by one increment by the setting means for size of focusing area. In this case, for example, an area in (1420) is vertically enlarged to a size in which the monitor screen (1310) is equally divided into 9 focusing areas. Fig. 14 (C) exemplifies the case where the focusing area is enlarged by one increment larger than that of Fig. 14 (B) by the setting means for size of focusing area. In this case, for example, the area in (1420) is vertically and horizontally enlarged, and size and layout of other focusing areas are changed, and ten-key symbols assigned to them are changed. In addition, only the area in (1420) is vertically and horizontally enlarged, and the size and layout of other focusing areas may not be changed. Note that, this is an example, and other changing methods of size of the focusing area may be used.

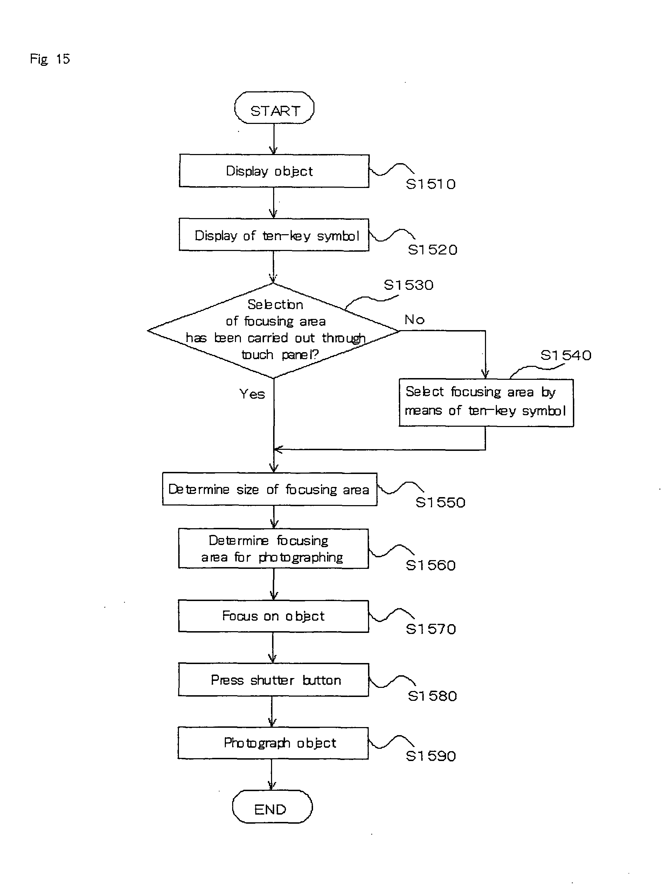

Fig. 15 is a flow chart explaining the processing flow of the portable terminal of the fifth embodiment. Steps S1510 to S 1540 and S 1560 to S1590 are the same as steps S 1210 to S 1240 and S1250 to S1280, respectively, in the flow chart of Fig. 12 of the fourth embodiment, so that the description thereof will be omitted. Further, step S1580 may not be necessary. At the outset, the object captured by the camera of the portable terminal is displayed on the monitor screen (a displaying step for object S1510). Subsequently, the ten-key symbol is displayed on the monitor screen, on which the object is displayed by said displaying step for object (S1510) (a displaying step for ten-key symbol S1520). Subsequently, it is determined whether the focusing area has been selected through the touch panel (a selecting step for focusing area through touch panel S1530). If it is determined by said selecting step for focusing area through touch panel (S1530) that the focusing area has not been selected through the touch panel, the focusing area, to which the ten-key symbol displayed in said displaying step for ten-key symbol (S 1520) has been assigned, is selected (a selecting step for focusing area corresponding to ten-key symbol S1540). Subsequently, a size of the focusing area selected in said selecting step for focusing area through touch panel (S 1530) or in said selecting step for focusing area corresponding to ten-key symbol (S1540) is determined. This processing is carried out by the setting means for size of focusing area (S 1550) (a setting step for size of focusing area S1550). Subsequently, the focusing area, of which size has been set in said setting step for size of focusing area (S1550), is determined as a focusing area for photographing (an inputting step for determination S1560). Subsequently, the object monitored within the focusing area for photographing determined in said inputting step for determination (S 1560) is focused (a focusing step for object S1570). Subsequently, the shutter button is pressed (a pressing step for shutter button S1580). Finally, the object focused in said focusing step for object (S1570) is photographed (a photographing step for object S1590). Further, said setting step for size of focusing area (S1550), and said inputting step for determination (S1560) may be carried out in reverse order. Therefore, the size of the focusing area may be changed after determining the focusing area.

The fifth embodiment is a portable terminal provided with a camera having a focusing area adjusting function, which further has the function of setting size of a focusing area in a monitor screen in addition to the functions of the portable terminal of the first to fourth embodiments. This enables adjustment of a size of a focusing area according to a size of an object to be focused.

## Claims

1. A portable terminal provided with a camera having a focusing area adjusting function, comprising:
a monitor screen, which is for monitoring an object;
a selecting unit, which is for selecting a focusing area in said monitor screen;
an inputting unit for determination, which is for determination of the focusing area selected by said selecting unit as a focusing area for photographing, which is a focusing area used for photographing; and
a focusing/photographing unit, which performs focusing on the object, which is monitored within the focusing area for photographing determined through said inputting unit for determination, and photographing of the object.

2. The portable terminal according to Claim 1, wherein
said portable terminal comprises,
an operating unit for ten-key, and
said selecting unit comprises,
displaying means for ten-key symbol, which divides the monitor screen into a plurality of areas, assigns a ten-key symbol to the respective areas, and displays the assigned ten-key symbol, and
selecting means for ten-key symbol, which selects the area in said monitor screen, to which the ten-key symbol has been assigned, as the focusing area for photographing by means of operating said operating unit for ten-key.

3. The portable terminal according to Claim 1, wherein
said portable terminal comprises,
an operating unit for cross-shaped key, and
said selecting unit comprises,
displaying means for cross-shaped key symbol, which displays a cross-shaped key symbol, which is operable by said operating unit for cross-shaped key, on the monitor screen, and
selecting means for cross-shaped key symbol, which selects a predetermined area, which includes the cross-shaped key, as the focusing area for photographing by means of operating said operating unit for cross-shaped key to move the cross-shaped key symbol displayed by said displaying means for cross-shaped key symbol within the monitor screen.

4. The portable terminal according to any one of Claims 1 to 3, wherein
said portable terminal comprises,
an operating unit for touch panel, and
said selecting unit comprises,
selecting means for area to be touched, which selects a predetermined area, which includes an area in the monitor screen touched through said operating unit for touch panel, as the focusing area for photographing.

5. The portable terminal according to any one of Claims 1 to 4, wherein
said selecting unit comprises,
setting means for size of focusing area, which is for setting size of the focusing area in the monitor screen.

6. The portable terminal according to Claim 2, wherein
said operating unit for ten-key is arranged in a position in which the operating unit for ten-key is operable by a thumb of one hand supporting a body of the portable terminal.

7. The portable terminal according to Claim 3, wherein
said operating unit for cross-shaped key is arranged in a position in which the operating unit for cross-shaped key is operable by a thumb of one hand supporting a body of the portable terminal.

8. The portable terminal according to Claim 4, wherein
said operating unit for touch panel is arranged in a position in which the operating unit for touch panel is operable by a thumb of one hand supporting a body of the portable terminal.

9. A method for operating a portable terminal provided with a camera having a focusing area adjusting function, comprising:
a display step, which displays an object;
a selecting step, which is for selecting a focusing area on a screen, on which the object is displayed by said display step;
an inputting step for determination, which is for determination of the focusing area selected by said selecting step as a focusing area for photographing, which is a focusing area used for photographing; and
a focusing/photographing step, which is for focusing on the object, which is monitored within the focusing area for photographing determined through said inputting step for determination, and for photographing of the object.

10. The method for operating a portable terminal provided with a camera having a focusing area adjusting function according to Claim 9, wherein
said selecting step comprises,
a displaying step for ten-key symbol, which divides the monitor screen into a plurality of areas, assigns a ten-key symbol to the respective areas, and displays the assigned ten-key symbol in said monitor step, and
a selecting step for ten-key symbol, which selects the area in said monitor screen, to which the ten-key symbol has been assigned, as the focusing area for photographing by means of operating ten-key.
